# EUROPEAN PATENT SPECIFICATION

(11) **EP 3 922 611 B1**
(45) Date of publication and mention of the grant of the patent: **05.07.2023**
(21) Application number: 21175502.0
(22) Date of filing: 24.05.2021
(51) Int. Cl.: C03B 27/04

(54) **METHOD AND DEVICE FOR TEMPERING GLASS SHEETS**
VERFAHREN UND VORRICHTUNG ZUM VORSPANNEN VON GLASSCHEIBEN
PROCÉDÉ ET DISPOSITIF DE TREMPE DE PLAQUES DE VERRE

(30) Priority: 08.06.2020 FI 20205593
(43) Date of publication of application: 15.12.2021
(73) Proprietor: Glaston Finland Oy, 33730 Tampere (FI)
(72) Inventor: Sulonen, Juha, 33730 Tampere (FI)
(74) Representative: LEITZINGER OY

(56) References cited:
- US-A1- 2015 082 834
- US-A1- 2020 131 070
- US-B2- 9 617 181

## Description

The invention relates to a method for tempering glass sheets, wherein a glass sheet at tempering temperature undergoes quenching by blowing cooling air on both surfaces of the glass sheet. The invention further relates to a device for implementing the method, which comprises a conveyor track and, above and below the conveyor track, cooling air boxes with cooling air blowing apertures positioned such that the cooling effect of the blowing through the blowing apertures is directed at the upper and lower surfaces of the moving glass sheet.

### Background of the invention

Glass tempering is a process where glass is first heated to tempering temperature and then cooled rapidly. Glass sheet tempering lines consist of a loading table, a heating furnace, a quencher and an unloading table. The invention relates to a quencher.

The most common type of glass tempered is soda lime silicate glass, the tempering of which the invention particularly concerns. The straightness and optical properties of the glass entering the tempering process are excellent. In the tempering process, the aim is to sufficiently increase the strength of the glass sheet while deteriorating its straightness and optical properties as little as possible. In addition to strength, another desired property of tempered glass is its safety in the event of breakage. Non-tempered glass breaks into large shards posing a risk of cutting. Tempered glass shatters into almost harmless small pieces.

The compressive stress formed on the surface of glass during tempering (the degree of reinforcement or temper) is dependent on the perpendicular temperature profile of the glass when the glass cools through the transition temperature range characteristic of glass (for soda lime silicate glass approximately 600→500°C). In such a case, the perpendicular temperature profile of glass has approximately the shape of a parabola. For example, in 4 mm thick glass, for which a surface compression of 100 MPa is sought, the temperature difference between the surface and the centre of the glass is approximately 100°C in the temperature profile. The residual stress profile which formed on the glass during tempering also has the shape of a parabola, where the above-mentioned 100 MPa surface compression corresponds to a tensile stress of approximately 46 MPa in the average thickness of the glass.

At the start of quenching, momentary tensile stress forms on the surface of the glass, which the glass sheet withstands up to an average of 30 MPa in theory. This limit is exceeded if the tempering temperature of the glass is too low. The risk of the glass breaking will then increase. On the other hand, an excessively high tempering temperature spoils the optical quality of the glass. The momentary tensile stress at the start of quenching will also increase with the cooling efficiency.

In the glass tempering process, especially when the desired surface tension levels of the glass are relatively high compared to the normal glass tempering process, hair cracks, which are difficult to detect, are formed on the glass at the early stages of the tempering process for various reasons, for example, due to the expansion of micro-cracks already originally existing on the glass surface, internal temperature differences in the glass and the thickness variation of the glass. In tempering where the temper aimed for the glass surface is markedly greater than in normal tempering, the hair cracks are, however, mainly caused by high cooling efficiency, that is, a high blowing pressure level of the cooling. Especially at the early stages of tempering, high cooling efficiency on the surface of the glass causes rapid cooling of the glass surface and strong momentary tensile stress, causing the micro-cracks on the surface of the glass to expand. In this case, the temperature of the glass sheet deeper down from the surface is still almost at the original tempering temperature and highly elastic. The hair cracks, therefore, only affect the surface layer of the glass. Within the surface area of the glass sheet, they are most often formed in its centre. This phenomenon is emphasised especially when compressed air blowing is used to enhance tempering, in which case the heat transfer from a single jet is intensive at any one point.

The invention solves the above hair crack problem which concerns, in particular, so-called super tempered glass. In super tempering, significantly greater temper is desired for the glass than in normal tempering. Super tempering can be achieved when the cooling efficiency of the air jets in the quenching unit is significantly increased with respect to tempering. The most common super tempered glass is so-called fire-resistant glass, or FRG glass, which is used to slow down the progression of fire in buildings. The glazing of the boundary surfaces of firesafe compartmentalised premises must pass demanding endurance tests according to fire safety standards. The compressive stress of the surface of soda lime silicate glass tempered into fire-resistant glass is at least 150 MPa, and usually higher. For example, a surface compression of approximately 175 MPa is often aimed at for 6 mm thick glass in order that the glass would more surely pass the E30 fire resistance test. On the other hand, on the market has also arisen the need for tempered FRG glass with even greater temper than the above, which would pass at least the E60 fire resistance test, that is, would withstand over 60 minutes in a fire safety test where the firing and ambient temperature exceed 900°C during the test. There is also demand on the market for tempered glass which passes the E90 fire resistance test. Thus, surface tensions up to 220 MPa are aimed at for the glass. At the same time as the requirements on the surface tension levels of glass have increased, the requirements on glass size have also increased. Thus, improved performance, adjustability and reproducibility are also required of the super tempering equipment. Tempering glass to a surface tension exceeding 160 MPa, and especially exceeding 180 MPa, is problematic due to the above-mentioned problem relating to hair cracks. Glass containing hair cracks is basically broken and thus unfit for use. The invention enables the tempering of glass into FRG glass without the above-mentioned breakage problem. FRG glass is typically 6-6.5 mm thick, which, when measured from the glass, in practice means a glass thickness of 5.8-6.7 mm. There is also demand for thicker and 4 mm (3.8-4.2 mm measured from the glass) FRG glass.

Currently, the most common way of aiming to avoid hair cracks is to increase the tempering temperature to over 670°C, which, however, deteriorates the optical quality of the glass. The invention makes it possible to lower the tempering temperature. In the method according to the invention, the suitable final temperature in the furnace, that is, the tempering temperature for soda lime silicate glass tempered to a surface tension of over 180 MPa, is preferably approximately 645°C-665°C, and in any case below 670°C.

The cooling efficiencies required in super tempering are high and implementing them requires high-power electric motors for the turbomachines, which consume a lot of electricity. The invention also makes possible considerable savings in energy consumption.

From the publications FI90046B and FI104422B is known a method and a device, wherein, at the tempering stage, the cooling air jets are produced partly with compressed air through pipe nozzles and partly with blowing air through the apertures in the blowing box. The devices only comprise one quenching zone. In reference FI104422B, the same zone also acts as an after-cooling zone, but the compressed air blasting is stopped at the after-cooling stage.

In the method of the patent US4445921, glass is first tempered with dry air, after which the glass is tempered with a gaseous sublimable material. The dry air has a lesser heat transfer coefficient than the sublimable material. In the example of the reference, the dry air heat transfer coefficient is 70 BTU/hr/ft²/°F (=397 W/m²/K) and that of the sublimable material is 115 BTU/hr/ft²/°F (=653 W/m²/K).

In patent application US2007122580A1, the momentary tensile stress of the surface exceeding 4800 psi (=33 MPa) and the breaking of the glass during tempering are avoided by setting the heat transfer coefficient in the first zone of the quencher to a significantly lower level than in the second zone. According to the calculations in table 3 of the reference, for example, the quenching of 0.25 inches (= 6.35 mm) thick glass, the tempering temperature of which is 1266 F (= 686°C), can be started with the heat transfer coefficient of 94 BTU/hr/ft²/°F (=533 W/m²/K) at the highest to ensure that the tensile stress limit of 33 MPa according to the reference is not exceeded and that the glass will not break. The calculations of the reference give 0.05 s as the duration of this first quenching stage, which would correspond to a quenching zone length of 17.5. mm at the typical transfer rate of 350 mm/s. In the second quenching zone, the heat transfer coefficient is 198 BTU/hr/ft²/°F (=1123 W/m²/K). According to the teaching of the reference, a glass sheet with a tempering temperature of 686°C does not withstand a heat transfer coefficient exceeding 121 BTU/hr/ft²/°F (= 686 W/m²/K) in the first quenching zone. It is proposed that the zone-specific adjustment of the heat transfer coefficient is made by adjusting the blowing distance, the temperature of the air, the flow rate or the volume flow rate.

US 9 617 181 B2 discloses a glass sheet that has a thickness of 3.8-6.4 mm and the glass sheet is tempered in a temperature not lower than 650° C. and not higher than 720° C. The roller-hearth furnace is at least partially oscillating and the air support tempering furnace is continuous. Said glass sheet is fire resistant glass and has a compressive surface stress of at least 160 MPa.

US 2020/131070 A1 discloses a FRG glass. It further discloses a method for heat tempering a glass sheet by blasting cooling air onto both surfaces. The initial blasting unit is divided, in a direction transverse to a motion of glass, into separately adjustable initial blasting zones, a blasting time or a blasting pressure of which is adjusted separately.

The blasting pressure in the initial cooling unit is typically 0.1-8 bar, and preferably 0.5-4 bar. The heat transfer coefficient is obtained by dividing the cooling capacity with the temperature difference between glass and air, i.e. increasing blasting pressure and shortening the blasting range increase the heat transfer coefficient, which increases cooling effect.

US 2015/082834 A1 discloses a method for tempering glass sheets, said method comprising heating the glass sheets to a tempering temperature in a furnace in which the glass sheet is moved back and forth while supported on rolls, and feeding the heated glass sheets into a quench unit which is divided into two quenching zones with separately controlled blasting pressures. It is an objective in US 2015/082834 A1 to provide a method and apparatus, which are capable of minimizing the anisotropy problem without substantially increasing the costs of a traditional tempering furnace.

### Summary of the invention

To obviate the disadvantages of prior art, the object of the invention is a method and a device which enable the tempering of glass to a surface tension of up to 150 MPa, and preferably up to 180 MPa, without the above-mentioned hair crack problem, to optically good quality and also energy-efficiently.

This object is achieved with the method according to the invention, on the basis of the characteristics disclosed in the accompanying claim 1. The object is also achieved with the device according to the invention, on the basis of the characteristics disclosed in claim 12. The dependent claims disclose preferred embodiments of the invention.

### Brief description of the figures

The invention is described in greater detail in the following, with reference to the accompanying drawings, in which
- Figure 1: shows in detail the cooling air boxes of the device for implementing the preferred embodiment of the method,
- Figure 2: shows a diagrammatic side view of the tempering device used for implementing the invention,
- Figure 3: determines the lengths of the quenching zones.

### Description of the embodiments of the invention

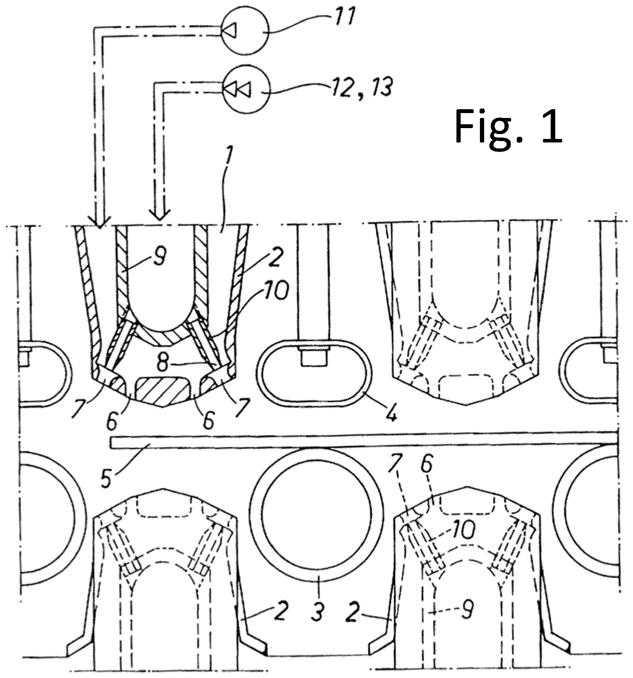

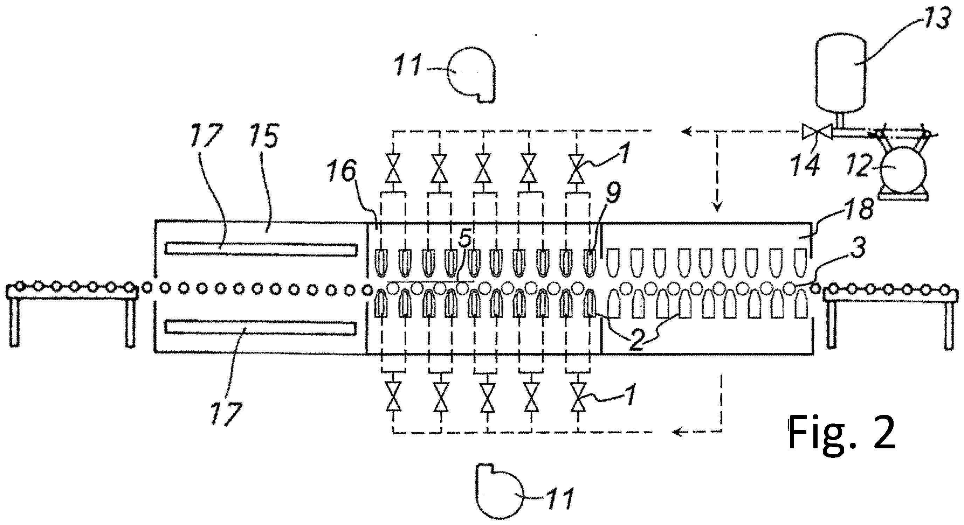

The tempering apparatus shown in Figure 2 comprises a furnace 15 provided with heating elements 17, by means of which the glass load containing at least one glass sheet 5 moving on the roller track is heated to tempering temperature. The glass load may include several glass sheets 5 adjacent to one another and in succession, but for the sake of clarity, Figure 2 only shows one glass sheet 5. The glass load reciprocates in the furnace and when the heating time according to the heating recipe has elapsed, the heated glass load is transferred on the roller track to the quenching section 16. The transfer speed W of the glass load is 250-800 mm/s, at which speed the glass load travels through the quenching section 16. The temper formed on the glass sheet 5 is dependent on the cooling process of the quenching section, and the purpose of the after-cooling section 18 is to cool the glass sheet to manual handling temperature. In the after-cooling section 18, the cooling efficiency is significantly lower than in the quenching section 16. In the quenching section 16, above and below the conveyor plane formed by the roller track are blowing boxes 2, inside which are compressed air boxes 9. Cooling air is supplied to the blowing boxes 2 by means of blowers 11. To the compressed air boxes 9, cooling air is supplied from a compressed air cylinder 13, which is filled by an air compressor 12. The quenching section comprises several quenching zones in which the blowing pressures of the compressed air are set to be separately adjusted by means of zone-specific pressure regulating valves 1. These zones can also be called compressed air blowing zones. In Figure 2, there are five such zones above the glass sheet and five below the glass sheet. In Figure 2, each zone covers two compressed air boxes 9. The blowing and compressed air boxes are shown in greater detail in Figure 1.

In Figure 1, the blowing and compressed air boxes above and below the glass sheet 5 supported on rollers 3 are essentially similar. Thus, they and their parts are marked with the same reference numerals on both sides of the glass sheet. The length of the blowing boxes 2 and compressed air boxes 9, that is, the measurement for the movement of the glass in the transverse horizontal direction is 1-3.5 m, depending on the width of the tempering line. The blowing boxes 2 are provided with blowing apertures 6 and 7, through which the air generated by the blower 11 is discharged as a jet towards the glass sheet 5.

These jets may be called blowing air jets. The blowing apertures 6, 7 form rows in the longitudinal direction of the blowing box 2, wherein the distance between adjacent blowing apertures is preferably 30-50 mm and the blowing apertures in different rows are preferably 15-25 mm at different points in the longitudinal direction of the blowing box. The diameter of blowing apertures 7 is 4-10 mm, preferably approximately 5-8 mm. The diameter of blowing apertures 6 is preferably 1-3 mm smaller than the diameter of blowing apertures 7, when the vertical distance from blowing apertures 6 to the glass sheet is shorter than from blowing apertures 7. When the distances are the same, the diameters are preferably identical. The rows formed by blowing apertures 6 are located between the rows formed by blowing apertures 7. The number of blowing apertures 6 may be essentially equal to the number of blowing apertures 7. The volume flow rate of the airflow generated by the blower 11 discharging through the blowing apertures 6, 7 depends on the magnitude of the blowing pressure or overpressure used, which is at least 2 kPa and within the range 2-20 kPa, depending on the thickness of the glass and the aim of the tempering. This blowing pressure of the blowing jets is preferably within the range 4-10 kPa. The blowing pressure can be adjusted by changing the rotational speed of the impeller of the blower 11. The blowing pressure can be adjusted separately for each side of the glass, but the blowing pressure, for example, in the blowing boxes above the quenching section, is preferably equal in all quenching zones.

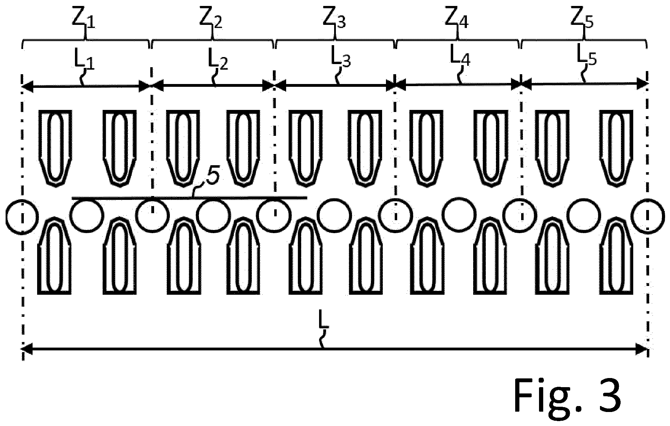

Strong airflow into the relatively confined space between the blowing boxes 2 and the glass sheet 5 generates an overpressure in the area with respect to the ambient pressure. When this overpressure is higher on the lower surface of the glass than on the upper surface, there is a risk of the glass sheet rising off the rollers, which would result in it hitting a blowing box and then breaking. In Figure 1, above the glass sheet 5, opposite the rollers 3 are false rollers 4, the purpose of which is to increase pressure on the upper surface of the glass sheet 5 to prevent the glass sheet from floating. For the sake of clarity, they have been omitted from Figures 2 and 3. Ensuring that the glass sheet remains in contact with the rollers is also controlled by separately adjusting the blowing distance above and below.

The compressed air boxes 9 inside the blowing boxes 2 are provided with pipe nozzles 10 screwed to them, which extend towards the blowing apertures 7. The pipe nozzles 10 have compressed air openings 8 with diameters ranging between 2-5 mm. The velocity of the airflow discharged through the pipe nozzle 10 and as a jet towards the glass sheet depends on the magnitude of the blowing pressure or overpressure used, which pᵢ is within the range 0-10 bar, and preferably between 0-6 bar, depending on the compressed air blowing zone, the thickness of the glass sheet and the surface compressive stress desired for the tempered glass. The jets discharged from the pipe nozzles 10 can be called compressed air jets. The blowing pressure can be adjusted separately for each zone by means of pressure regulating valves 1. The number of pipe nozzles 10 in one compressed air box 9 is typically 40-80 per metre of compressed air box.

The airflow discharged from the pipe nozzles 10 is preferably discharged from the blowing box 2 towards the glass sheet via a blowing aperture 7, through which is also discharged air from the blower 11 towards the glass. The outer edges of the pipe nozzles 10 taper conically towards the tip of the pipe nozzle. The tip of a particular pipe nozzle 10 is almost flush with the inner surface of a blowing box 2 and may extend inside the blowing aperture 7 or remain slightly outside it. The tip of a particular pipe nozzle 10 preferably does not limit, at least substantially, the flow area of the corresponding blowing aperture 7. The diameter of the blowing aperture 7 is preferably at least 1 mm larger than the diameter of the compressed air opening 8. Preferably 30-80% of the blowing apertures of the blowing box 9 are provided with pipe nozzles 10.

The vertical blowing distance from the blowing apertures 6, 7 to the glass sheet is arranged to be adjustable, for example, by means of chains, cog wheels and an electric motor. It is important to be able to adjust the upper and lower blowing distances separately. The blowing distance is the same for all the corresponding blowing apertures on the same side of the quenching section 16. The vertical blowing distance from the blowing apertures 6, 7 to the glass sheet is preferably 10-25 mm, in which case it is preferably 3-12 mm greater from the tips of the pipe nozzles 10 to the glass.

In the quenching section 16, an enhanced cooling procedure is carried out by blowing two types of air jets on the same surface of the glass sheet, that is, air jets generated by an air compressor 12 through the pipe nozzles 10 and air jets generated by the blower 11 through the blowing apertures 6, 7. Together, the air jets produce a convective heat transmission coefficient h on the surface of the glass. In quenching, the glass also cools through radiation, but in super tempering, the share of radiation is minor. Radiation from glass at a typical tempering temperature of 650-670°C equals approximately 40 kW/m² of the glass surface, which as a radiation heat transfer coefficient corresponding to convective heat transfer coefficient corresponds to approximately 60 W/m²/K, which value diminishes as the temperature of the glass decreases.

From the point of view of the invention, it is essential that the compressed air blowing is divided at least into three, and preferably at least into five, quenching zones, the compressed air blowing pressures of which can be separately adjusted. The cooling efficiency Q (the unit is W/m²) achieved by the air jets on the surface of the glass sheet can be calculated from the equation Q = h × (Tglass - Tair), where Tair is the temperature of the air discharged towards the glass and Tglass is the temperature on the surface of the glass. The average convective heat transfer coefficient h is dependent on the diameters, number, location, blowing distances and blowing pressures of the blowing apertures and compressed air apertures. There is local variation in the heat transfer coefficient achieved by the cooling air jet system on the surface of the glass. The local heat transfer coefficient is at its highest at the points of impact of the air jets on the surface of the glass. By the average heat transfer coefficient is referred to the averaged heat transfer coefficient over the area covered by a part of the jet system. For example, the average heat transfer coefficient of zone 1 is the average heat transfer coefficient over the area L₁ × WIDTH, where L₁ is the length covered by zone 1 of the length of the quencher and WIDTH is the width of the glass, that is, the measurement for the movement of the glass in the transverse horizontal direction. In practice, the cooling efficiency of a specific cooling air jet system on the surface of the glass can only be adjusted by changing the blowing distance or blowing pressure. By merely changing the blowing distance, no significant change can be achieved in cooling efficiency. Adjusting by means of the blowing pressure is clearly more effective, simpler and more accurate than adjusting by means of the blowing distance. Furthermore, reducing the cooling efficiency by means of the blowing distance does not reduce compressed air consumption at all, but reducing by means of the blowing pressure does.

The division of cooling efficiency into zones with respect to quenching time, that is, in the direction of travel of the glass sheet in the quenching section, is preferably done by separately adjusting the blowing pressure in successive compressed air blowing zones. This division of cooling efficiency into zones is necessary from the point of view of the invention in order that the hair crack problem of the glass sheet in super tempering, as discussed above in the specification, can be solved. The contact of the glass sheet with the rollers is ensured by adjusting the blowing distance, and zone-specifically separately by changing the blowing pressure of the pipe nozzles 10 above and below the glass sheet. The blowing pressure of the pipe nozzles 10 on the upper surface of the glass sheet is preferably at least 0.2 bar higher than on the lower surface when the blowing pressure is at least 1 bar. In tempering, the glass sheet should cool essentially along the same temperature curve on the upper and lower surfaces, to avoid the finished tempered glass sheet being bent. This even cooling of the glass surfaces is controlled by changing the blowing pressures on either side.

In the device example of Figure 2, there are five quenching zones (Z₁ - Z₅ in Figure 3), that is, compressed air zones separately adjustable by the blowing pressure of the pipe nozzles 10, on either side of the glass. The length of the quenching zone is the proportion of the length L of the quencher covered by the quenching zone. The lengths of the zones in Figures 2 and 3 are L₁ - L₅. In the device example of Figures 2 and 3, each zone with separately adjustable compressed air blowing pressure covers two roller gaps and two compressed air boxes on either side of the glass. Zones Z₁ - Z₅ may also be of different lengths. The compressed air blowing pressures set for the pressure regulating valves 1 of the zones towards the upper surface of the glass are pᵤ₁ - pᵤ₅, which together with the blowing air produce convective heat transfer coefficients hᵤ₁ - hᵤ₅ on the upper surface of the glass. The blowing pressures of the compressed air apertures 8 of the zones towards the lower surface of the glass are pₗ₁ - pₗ₅, which together with the blowing air produce average convective heat transfer coefficients hₗ₁ - hₗ₅ on the lower surface of the glass. The upper blowing distance Hᵤ and the blowing pressure p_{fan,u} set by the blowers 11 to the upper blowing boxes are the same in all zones above the glass sheet. The lower blowing distance Hₗ and the blowing pressure p_{fan,l} set by the blowers 11 to the lower blowing boxes are the same in all zones below the glass sheet.

When the glass sheet transfers from the tempering furnace to the quenching section at transfer speed W, it arrives in zone Z₁, where the pipe nozzles 10 blow air jets on its upper surface at blowing pressure p₁ᵤ and on its lower surface at blowing pressure p₁ₗ. These blowing pressures range between 1-10 bar, and preferably between 1-6 bar. Preferably, p₁ᵤ ≥ p₁ₗ + 0,2 bar. The blowing pressure of the blowers 11 into the blowing boxes 2 and further through the blowing apertures 6, 7 as air jets towards the glass is p_{fan,u} above the glass and p_{fan,l} below the glass. The average convective heat transfer coefficient jointly produced by the air jets in zone Z₁ is h₁ᵤ on the upper surface of the glass and h₁ₗ on the lower surface of the glass. These heat transfer coefficients are over 800 W/m²/K with less than 3.8 mm thick glass and over 750 W/m²/K with at least 3.8 mm thick glass, and preferably over 800 W/m²/K. The glass sheet (each point of it) remains in zone Z₁ for a time t₁ = L₁ / W. The length of zone Z₁ is 80-550 mm, and it comprises 1-4 compressed air blowing boxes 9. The length of zone Z₁ is preferably 100-400 mm, and it comprises 1-3 compressed air blowing boxes 9. The residence time in zone Z₁ is 0,2-2 s. Preferably, the residence time in zone Z₁ is 0.3-1.5 s.

In the second zone Z₂, the blowing pressures are p₂ᵤ, p₂ₗ and they are at least 0.5 bar, and preferably at least 1 bar, lower than in the first zone Z₁. Preferably, p₂ᵤ ≥ p₂ₗ + 0,2 bar, if p₂ₗ ≥ 1 bar. The blowing pressures of the blowers 11 into the blowing boxes and further towards the glass sheet are the same as in zone Z₁. The average convective heat transfer coefficient jointly produced by the air jets in zone Z₂ is h₂ᵤ on the upper surface of the glass and h₂ₗ on the lower surface of the glass. These heat transfer coefficients are lower than in zone Z₁. In the second quenching zone, they are preferably at least 10%, and even more preferably at least 20%, lower than in the first. The length of zone Z₂ is 80-550 mm, and it comprises 1-4 compressed air blowing boxes 9. The length of zone Z₂ is preferably 100-400 mm, and it comprises 1-3 compressed air blowing boxes 9. The residence time in zone Z₂ is 0.2-2 s. Preferably, the residence time in zone Z₂ is 0,3-1.5 s.

In the third zone Z₃, the blowing pressures are p₃ᵤ, p₃ₗ and they are preferably at least 0.5 bar higher than in zone Z₁ and at least 1 bar higher than in zone Z₂. Preferably, p₃ᵤ ≥ p₃ₗ + 0.2 bar. The blowing pressures of the blowers 11 into the blowing boxes and further towards the glass sheet are the same as in zone Z₁. The average convective heat transfer coefficient jointly produced by the air jets in zone Z₃ is h₃ᵤ on the upper surface of the glass and h₃ₗ on the lower surface of the glass. These heat transfer coefficients are higher, and preferably at least 20% higher than in zone Z₂, and 10% higher than in zone Z₁. The average convective heat transfer coefficients in the third zone Z₃ are at least as high as in the first zone Z₁. In the first quenching zone, the blowing pressure of the pipe nozzles is preferably at least 1 bar, in the second zone at most 0.5 bar and in the third zone at least 2 bar.

The length of zone 3 is at least 1500 mm, if it is the last zone. The quenching section preferably also comprises at least a fourth and a fifth zone. The lengths of zones 3-5 are in that case at least 300 mm and in total at least 1500 mm. The blowing pressures in zone 4 are of the same level as in zone 3. The blowing pressures of the blowers 11 to the blowing boxes and further towards the glass sheet are the same in zones 3-5 as in zone 1.

The magnitude of the blowing pressures of compressed air blowing in the first and third zones is at least 1 bar. Preferably, the magnitude of the blowing pressures of compressed air blowing in the first zone is within the range 1-3 bar, in the second zone within the range 0-1 bar, and in the third zone within the range 2-5 bar.

Preferably, and when the thickness of the glass sheet to be tempered is 5.8-6.7 mm, the average convective heat transfer coefficient in the first quenching zone is at least 750 W/m²/K, and in the second quenching zone at most 600 W/m²/K, and in the third quenching zone at least 800 W/m²/K. The transfer speed of the glass is then preferably 250-600 mm/s and each unit of length of the glass sheet remains in both of the first two zones for 0.5-1.3 seconds. In Table 1 are shown preferred limit values for the average convective heat transfer coefficients of zones 1-3. Particularly the heat transfer coefficient of zone 3 is dependent on the desired surface tension of the glass which is at least 150 MPa.

**Table 1**

| Glass thickness | hᵤ₁ and hₗ₁ | hᵤ₂ and hₗ₂ | hᵤ₃ and hₗ₃ |
|---|---|---|---|
| Less than 3.8 | 800-1000 | 200-600 | 1000-1500 |
| 3.8-4.2 | 750-1000 | 200-600 | 900-1500 |
| 5.8-6.7 | 750-1000 | 200-600 | 800-1500 |
| 7.8-8.2 | 750-1000 | 200-600 | 750-1500 |
| mm | W/m²/K | W/m²/K | W/m²/K |

### Example 1

In embodiment 1 in Table 2, the quenching section comprises six separately adjustable compressed air blowing zones. The blowing devices, that is, the blowing boxes and compressed air boxes and their features were identical in all zones. The roller gap was 125 mm, that is, for example the first 375 mm long zone covered three compressed air boxes. The zone lengths Lᵢ (where i is the running number of the zone) and the blowing pressures used are shown in Table 2, which also shows the calculated average convective heat transfer coefficients (= ht coefficient) jointly produced by the air jets in the different zones. The thickness of the glass being tempered was 6 mm and the transfer speed W was 375 mm/s. The blowing distance on the upper surface of the glass was 15 mm and on the lower surface 15 mm. The tempering temperature of the glass was 665°C. In Table 2, time tᵢ refers to the residence time of a certain point of the glass in the zone, that is, tᵢ = Lij W.

**Table 2**

| Zone Zᵢ | Length Lᵢ | Time tᵢ | Blowing pressure pᵤᵢ and pₗᵢ | Blowing pressure p_{fan,u} and p_{fan,u} | Ht coefficient hᵤᵢ and hₗᵢ |
|---|---|---|---|---|---|
| Z₁ | 375 | 1 | 1.6 | 7 | 810 |
| Z₂ | 250 | 0.67 | 0 | 7 | 475 |
| Z₃ | 625 | 1.67 | 3.6 | 7 | 1072 |
| Z₄ | 625 | 1.67 | 3.6 | 7 | 1072 |
| Z₅ | 625 | 1.67 | 2.5 | 7 | 988 |
| Z₆ | 625 | 1.67 | 0 | 7 | 475 |
| | mm | s | bar | kPa | W/m²/K |

With quenching according to example 1, a surface tension level of approximately 220 MPa was achieved for 6 mm glass, which provided the durability required for at least the E60 and even E90 fire resistance classification in a fire resistance test. The tempered glass was free of hair cracks and of acceptable optical quality. The significant decrease in the compressed air blowing pressures and heat transfer coefficients in the second quenching zone with respect to the blowing pressures in zones 1 and 3 were found to be important in avoiding hair cracks. On the other hand, the drop in blowing pressure in the first blowing zone clearly below the value in Table 2 (1.6 bar) was found to be detrimental to the surface tension level of the tempered glass and the optical quality of the glass. The blowing pressure reductions at the end, that is, in zones Z₅ and Z₆, were made for energy saving reasons because maintaining the blowing pressure on the same level as in zones Z₃ and Z₄, did not increase the surface tension of the glass by more than approximately 2 MPa.

By means of the device according to the invention, the surface tension level of the glass, the prevention of hair cracks and the straightness of the glass are controlled by adjusting the pressure level of the pressure regulating valves in each zone and on either side of glass. If the pressure regulating valves of a zone are not opened at all, the glass in the zone is only affected by the blowing pressure used during the transfer conveyance. Dividing the quenching section into at least three and preferably into at least five separately adjustable compressed air blowing zones and the characteristic of the pressure regulating valve by means of which the air supply to the compressed air blowing zone can be very quickly cut off, that is, the blowing pressure can be dropped to zero, are very important factors from the point of view of saving energy in compressed air production. Compressed air blowing to each of the zones is started when the leading edge of the glass load approaches the beginning of the zone at margin R1 and ended when the rear edge of the glass load moves away from the end of the zone at margin R2. Margins R1 and R2 preferably range between 0-150 mm. Even more preferably margin R1 is 0-50 mm and margin R2 0-50 mm. In the following example, the margins are set to zero for the sake of clarity of the example. For example, if the length of the glass load were 1000 mm, the transfer speed were 500 mm/s and the quencher only had one 3000 mm long zone, the compressed air blowing over the entire zone would last for (3000 + 1000) / 500 = 8 s. In the case of six 500 mm long zones, the blowing in one zone would only take (500 + 1000) / 500 = 3 s. In this example, the division into zones saves 5/8 of the compressed air consumption. Thus, the transfer speed and load length of the glass determine the operating time of each individual compressed air blowing zone.

The device according to the invention also includes a computer and a device providing the control system with location data on the glass load, on the basis of which data, the pressure regulation valves of the zones are opened and closed. The device is, for example, the servomotor of the tempering furnace conveyor or a pulse transmitter connected to the conveyor's actuators. The device according to the invention also includes pressure gauges for measuring the blowing pressures.

The invention described in the foregoing is not limited to the disclosed embodiment but can be modified in various ways within the scope of protection defined by the claims.

## Claims

1. A method for tempering glass sheets to a surface compressive stress of at least 150 MPa, in which method the quenching of the glass sheet is carried out when the glass sheet travels through the quenching section by blowing air jets on the upper and lower surfaces of the glass sheet with a blower, through blowing apertures (6, 7) in the blowing box and by means of air compressor pressure through pipe nozzles (10), **characterised in that** the quenching section comprises at least three successive quenching zones, and the average convective heat transfer coefficient jointly produced by the blowing and the compressed air jets on the upper and lower surfaces of the glass sheet is at least 750 W/m²/K in the first zone, at least 10% lower in the second zone than in the first, and at least equally high in the third zone as in the first, and these zone-specific differences in the heat transfer coefficient are implemented by changing the blowing pressures of the pipe nozzles (10).

2. A method according to claim 1 for tempering glass sheets, **characterised in that** in the first quenching zone, the average convective heat transfer coefficient is at least 800 W/m²/K.

3. A method according to claim 1 for tempering glass sheets, **characterised in that** the average convective heat transfer coefficient is at least 10% higher in the third quenching zone than in the first.

4. A method according to claim 1 for tempering glass sheets, **characterised in that** the thickness of the glass sheet to be tempered is 5.8-6.7 mm and the average convective heat transfer coefficient in the first quenching zone is at least 750 W/m²/K, in the second quenching zone at most 600 W/m²/K, and in the third quenching zone at least 800 W/m²/K.

5. A method according to any of the claims 1-4 for tempering glass sheets, **characterised in that** the tempering temperature of the glass sheet to be tempered is less than 670°C, and the aimed compressive stress on the surface of the glass sheet is at least 180 MPa.

6. A method according to claim 1 for tempering glass sheets, **characterised in that** the heat transfer coefficient in the first and third quenching zones is at least 20% higher than in the second quenching zone.

7. A method according to claim 1 for tempering glass sheets, **characterised in that** in the second quenching zone, the blowing pressure of the pipe nozzles (10) is at least 0.5 bar lower than the in the first and third, where the blowing pressure of the pipe nozzles (10) is at least 1 bar.

8. A method according to claim 1 for tempering glass sheets, **characterised in that** in the first quenching zone, the blowing pressure of the pipe nozzles (10) is at least 1 bar, in the second at most 0.5 bar and in the third at least 2 bar.

9. A method according to claims 1 and 7 for tempering glass sheets, **characterised in that** in at least one quenching zone, the blowing pressure of the pipe nozzles (10) above the glass sheet is at least 0.2 bar higher than that of those below the glass sheet.

10. A method according to claim 1 for tempering glass sheets, **characterised in that** the transfer speed of the glass is 250-600 mm/s, and each unit of length of the glass sheet remains in both of the first two zones for 0.3-1.5 seconds.

11. A method according to claims 1 and 7 for tempering glass sheets, **characterised in that** the blowing of compressed air with the pipe nozzles (10) in each of the zones is started when the leading edge of the glass load approaches the beginning of the zone at a distance of 0-150 mm, and ended when the rear edge of the glass load moves away from the end of the zone at a distance of 0-150 mm from the end of the zone.

12. A device for tempering glass sheets to a surface compressive stress of at least 150 MPa, wherein the quenching of the glass sheet is carried out when the glass sheet travels through the quenching section by blowing air jets on the surface of the glass, which are generated by the blower (11), through the blowing apertures (6, 7) in the blowing boxes and by means of air compressor pressure through the pipe nozzles (10) attached to the compressed air boxes inside the blowing boxes, **characterised in that** in the quenching section, on either side of the glass sheet, are at least three compressed air convection blowing zones of the pipe nozzles (10), the blowing pressure of which is set to be separately adjustable, and the length of the first and second zones is 80-550 mm.

13. A device according to claim 12 for tempering glass sheets, **characterised in that** at the start of the quenching section, both above and below the glass sheet are at least five successive compressed air convection blowing zones with separately adjustable blowing pressure.

14. A device according to claim 12 for tempering glass sheets, **characterised in that** the length of the first and second zones is 100-400 mm.

15. A device according to claim 12 for tempering glass sheets, **characterised in that** both the first and the second zone cover 1-3 compressed air blowing boxes on either side of the glass sheet.

## Patentansprüche

1. Verfahren zum Vorspannen von Glasscheiben auf eine Oberflächendruckspannung von mindestens 150 MPa, bei dem das Abschrecken der Glasscheibe beim Durchlaufen der Abschreckstrecke durch Blasen von Luftstrahlen auf die Ober- und Unterseite der Glasscheibe mit einem Gebläse durch Blasöffnungen (6, 7) im Blaskasten und mittels Luftkompressordruck durch Rohrdüsen (10) durchgeführt wird, **dadurch gekennzeichnet, dass** die Abschreckstrecke mindestens drei aufeinander folgende Abschreckzonen umfasst, und der mittlere konvektive Wärmeübertragungskoeffizient, der durch das Blasen und die Druckluftstrahlen auf der Ober- und Unterseite der Glasscheibe gemeinsam erzeugt wird, in der ersten Zone mindestens 750 W/m²/K, in der zweiten Zone mindestens 10 % niedriger als in der ersten und in der dritten Zone mindestens gleich hoch wie in der ersten ist, und diese zonenspezifischen Unterschiede im Wärmeübergangskoeffizienten durch Veränderung der Blasdrücke der Rohrdüsen (10) realisiert werden.

2. Verfahren nach Anspruch 1 zum Vorspannen von Glasscheiben, **dadurch gekennzeichnet, dass** in der ersten Abschreckzone der durchschnittliche konvektive Wärmeübertragungskoeffizient mindestens 800 W/m²/K beträgt.

3. Verfahren nach Anspruch 1 zum Vorspannen von Glasscheiben, **dadurch gekennzeichnet, dass** der durchschnittliche konvektive Wärmeübertragungskoeffizient in der dritten Abschreckzone mindestens 10 % höher ist als in der ersten Abschreckzone.

4. Verfahren nach Anspruch 1 zum Vorspannen von Glasscheiben, **dadurch gekennzeichnet, dass** die Dicke der zu härtenden Glasscheibe 5,8-6,7 mm beträgt und der mittlere konvektive Wärmeübertragungskoeffizient in der ersten Abschreckzone mindestens 750 W/m²/K, in der zweiten Abschreckzone höchstens 600 W/m²/K und in der dritten Abschreckzone mindestens 800 W/m²/K beträgt.

5. Verfahren nach Anspruch 1-4 zum Vorspannen von Glasscheiben, **dadurch gekennzeichnet, dass** die Vorspanntemperatur der vorzuspannenden Glasscheibe weniger als 670 °C beträgt und die angestrebte Druckspannung an der Oberfläche der Glasscheibe mindestens 180 MPa beträgt.

6. Verfahren nach Anspruch 1 zum Vorspannen von Glasscheiben, **dadurch gekennzeichnet, dass** der Wärmeübertragungskoeffizient in der ersten und dritten Abschreckzone um mindestens 20 % höher ist als in der zweiten Abschreckzone.

7. Verfahren nach Anspruch 1 zum Vorspannen von Glasscheiben, **dadurch gekennzeichnet, dass** in der zweiten Abschreckzone der Blasdruck der Rohrdüsen (10) um mindestens 0,5 bar niedriger ist als in der ersten und dritten, wobei der Blasdruck der Rohrdüsen (10) mindestens 1 bar beträgt.

8. Verfahren nach Anspruch 1 zum Vorspannen von Glasscheiben, **dadurch gekennzeichnet, dass** in der ersten Abschreckzone der Blasdruck der Rohrdüsen (10) mindestens 1 bar, in der zweiten höchstens 0,5 bar und in der dritten mindestens 2 bar beträgt.

9. Verfahren nach Anspruch 1-7 zum Vorspannen von Glasscheiben, **dadurch gekennzeichnet, dass** in mindestens einer Abschreckzone der Blasdruck der Rohrdüsen (10) oberhalb der Glasscheibe um mindestens 0,2 bar höher ist, als derjenige der Düsen unterhalb der Glasscheibe.

10. Verfahren nach Anspruch 1 zum Vorspannen von Glasscheiben, **dadurch gekennzeichnet, dass** die Transfergeschwindigkeit des Glases 250-600 mm/s beträgt und jede Längeneinheit der Glasscheibe 0,3-1,5 Sekunden lang in den ersten beiden Zonen verbleibt.

11. Verfahren nach Anspruch 1-7 zum Vorspannen von Glasscheiben, **dadurch gekennzeichnet, dass** das Einblasen von Druckluft mit den Rohrdüsen (10) in jeder der Zonen beginnt, wenn sich die Vorderkante der Glasladung dem Anfang der Zone in einem Abstand von 0-150 mm nähert, und beendet wird, wenn sich die Hinterkante der Glasladung vom Ende der Zone in einem Abstand von 0-150 mm vom Ende der Zone entfernt.

12. Vorrichtung zum Vorspannen von Glasscheiben auf eine Oberflächendruckspannung von mindestens 150 MPa, wobei das Abschrecken der Glasscheibe beim Durchlaufen der Abschreckstrecke durch Blasen von Luftstrahlen auf die Glasoberfläche, die durch das Gebläse (11) erzeugt werden, durch die Blasöffnungen (6, 7) in den Blaskästen und mittels Luftkompressordruck durch die an den Druckluftkästen innerhalb der Blaskästen angebrachten Rohrdüsen (10) erfolgt, **dadurch gekennzeichnet, dass** in der Abschreckstrecke sich beiderseits der Glasscheibe mindestens drei Druckluft-Konvektionsblaszonen der Rohrdüsen (10) befinden, deren Blasdruck getrennt einstellbar ist, und die Länge der ersten und zweiten Zone 80-550 mm beträgt.

13. Vorrichtung nach Anspruch 12 zum Vorspannen von Glasscheiben, **dadurch gekennzeichnet, dass** am Beginn der Abschreckstrecke sich sowohl oberhalb als auch unterhalb der Glasscheibe mindestens fünf aufeinander folgende Druckluft-Konvektionsblaszonen mit separat einstellbarem Blasdruck befinden.

14. Vorrichtung nach Anspruch 12 zum Vorspannen von Glasscheiben, **dadurch gekennzeichnet, dass** die Länge der ersten und zweiten Zone 100-400 mm beträgt.

15. Vorrichtung nach Anspruch 12 zum Vorspannen von Glasscheiben, **dadurch gekennzeichnet, dass** sowohl die erste als auch die zweite Zone 1-3 Drucklufteinblaskästen auf beiden Seiten der Glasscheibe abdeckt.

## Revendications

1. Procédé de trempe de vitres jusqu'à une contrainte de compression de surface d'au moins 150 MPa, dans lequel procédé la trempe des vitres est réalisée lorsque la vitre passe à travers la section de trempe en soufflant des jets d'air sur les surfaces supérieure et inférieure de la vitre avec un souffleur, à travers des orifices de soufflage (6, 7) dans le compartiment de soufflage et au moyen d'une pression de compresseur d'air à travers des buses de tuyaux (10), **caractérisé en ce que** la section de trempe comprend au moins trois zones de trempe successives, et que le coefficient de transfert thermique convectif moyen produit conjointement par le soufflage et les jets d'air comprimé sur les surfaces supérieure et inférieure de la vitre est d'au moins 750 W/m²/K dans la première zone, au moins 10 % plus bas dans la deuxième zone que dans la première, et au moins de niveau égal à la première zone dans la troisième zone, et que ces différences spécifiques aux zones de coefficient de transfert thermique sont mises en œuvre en modifiant les pressions de soufflage des buses de tuyaux (10).

2. Procédé selon la revendication 1 pour la trempe de vitres, **caractérisé en ce que**, dans la première zone de trempe, le coefficient de transfert thermique convectif moyen est d'au moins 800 W/m²/K.

3. Procédé selon la revendication 1 pour la trempe de vitres, **caractérisé en ce que** le coefficient de transfert thermique convectif moyen est au moins 10 % plus élevé dans la première zone de trempe que dans la première.

4. Procédé selon la revendication 1 pour la trempe de vitres, **caractérisé en ce que** l'épaisseur de la vitre à tremper est de 5,8 à 6,7 mm et que le coefficient de transfert thermique convectif moyen dans la première zone de trempe est d'au moins 750 W/m²/K, dans la deuxième zone de trempe d'au plus 600 W/m²/K, et dans la troisième zone de trempe d'au moins 800 W/m²/K.

5. Procédé selon l'une quelconque des revendications 1 à 4 pour la trempe de vitres, **caractérisé en ce que** la température de trempe de la vitre à tremper est inférieure à 670 °C, et que la contrainte de compression sur la surface de la vitre est d'au moins 180 MPa.

6. Procédé selon la revendication 1 pour la trempe de vitres, **caractérisé en ce que** le coefficient de transfert thermique dans les première et troisième zones de trempe est au moins 20 % plus élevés que dans la deuxième zone de trempe.

7. Procédé selon la revendication 1 pour la trempe de vitres, **caractérisé en ce que**, dans la deuxième zone de trempe, la pression de soufflage des buses de tuyaux (10) est au moins inférieure de 0,5 bar à ce qu'elle est dans les première et troisième zones, la pression de soufflage des buses de tuyaux (10) étant d'au moins 1 bar.

8. Procédé selon la revendication 1 pour la trempe de vitres, **caractérisé en ce que**, dans la première zone de trempe, la pression de soufflage des buses de tuyaux (10) est d'au moins 1 bar, dans la deuxième d'au plus 0,5 bar et dans la troisième d'au moins 2 bars.

9. Procédé selon les revendications 1 et 7 pour la trempe de vitres, **caractérisé en ce que**, dans au moins une zone de trempe, la pression de soufflage des buses de tuyaux (10) au-dessus de la vitre est plus élevée d'au moins 0,2 bar que celle de celles situées en dessous de la vitre.

10. Procédé selon la revendication 1 pour la trempe de vitres, **caractérisé en ce que** la vitesse de transfert du verre est de 250 à 600 mm/s, et que chaque unité de longueur de la vitre reste dans les deux premières zones pendant 0,3 à 1,5 secondes.

11. Procédé selon les revendications 1 et 7 pour la trempe de vitres, **caractérisé en ce que** le soufflage d'air comprimé avec les buses de tuyaux (10) dans chacune des zones démarre lorsque le bord avant de la charge de verre s'approche du début de la zone à une distance de 0 à 150 mm, et se termine lorsque le bord arrière de la charge de verre s'écarte de la fin de la zone à une distance de 0 à 150 mm de la fin de la zone.

12. Dispositif de trempe de vitres jusqu'à une contrainte de compression de surface d'au moins 150 MPa, dans lequel la trempe des vitres est réalisée lorsque la vitre passe à travers la section de trempe en soufflant sur les surfaces supérieure et inférieure de la vitre des jets d'air qui sont générés par le souffleur (11), à travers le orifices de soufflage (6, 7) dans le compartiment de soufflage et au moyen d'une pression de compresseur d'air à travers les buses de tuyaux (10) fixées au compartiment d'air comprimé à l'intérieur des compartiments de soufflage, **caractérisé en ce que** la section de trempe, des deux côtés de la vitre, il y a au moins trois zones de soufflage à convection d'air comprimé des buses de tuyaux (10) dont la pression de soufflage est définie de manière à être réglable séparément, et que la longueur des première et deuxième zones est de 80 à 550 mm.

13. Dispositif selon la revendication 12 pour la trempe de vitres, **caractérisé en ce que**, au début de la section de trempe, à la fois au-dessus et en-dessous de la vitre, il y a au moins cinq zones successives de soufflage à convection d'air comprimé avec une pression de soufflage réglable séparément.

14. Dispositif selon la revendication 12 pour la trempe de vitres, **caractérisé en ce que** la longueur des première et deuxième zones est de 100 à 400 mm.

15. Dispositif selon la revendication 12 pour la trempe de vitres, **caractérisé en ce que** les première et seconde zones couvrent toutes deux 1 à 3 compartiments de soufflage d'air comprimé des deux côtés de la vitre.
